Europäisches Patentamt

European Patent Office

Office européen des brevets

(19)

(11) Veröffentlichungsnummer : **0 117 986**
**B1**

(12) **EUROPÄISCHE PATENTSCHRIFT**

(45) Veröffentlichungstag der Patentschrift :
13.04.88

(21) Anmeldenummer : 84100580.4

(22) Anmeldetag : 20.01.84

(51) Int. Cl.⁴ : **C 01 B 17/88, B 01 D 1/00**

(54) Verfahren und Einrichtung zum Konzentrieren und Reinigen von organische Verunreinigungen enthaltender Schwefelsäure.

(30) Priorität : 09.02.83 CH 723/83

(43) Veröffentlichungstag der Anmeldung :
12.09.84 Patentblatt 84/37

(45) Bekanntmachung des Hinweises auf die Patenterteilung : 13.04.88 Patentblatt 88/15

(84) Benannte Vertragsstaaten :
AT BE DE FR GB IT NL SE

(56) Entgegenhaltungen :
EP-A- 0 021 210
EP-A- 0 022 473
DE-B- 1 233 368
DE-C- 611 992

(73) Patentinhaber : **Bertrams AG**
**Aeschengraben 9**
**CH-4051 Basel (CH)**

(72) Erfinder : **Küng, Hans Rudolf**
**Gassackerweg 37**
**CH-4402 Frenkendorf (CH)**
Erfinder : **Forter, Hansruedi**
**Schlossweg 3**
**Ch-4466 Ormalingen (CH)**
Erfinder : **Reimann, Peter**
**Haupststrasse 91**
**CH-4457 Diegten (CH)**

(74) Vertreter : **Willi, Anton, J.**
**Alsenmattstrasse 2**
**CH-8800 Thalwil (CH)**

## Beschreibung

Die Erfindung betrifft ein Verfahren und eine Einrichtung zum Konzentrieren und Reinigen von organische Verunreinigungen enthaltender Schwefelsäure.

Bei vielen Arbeitsverfahren in der organischen Chemie fällt verdünnte Schwefelsäure, meist mit organischen Verunreinigungen, in mehr oder weniger grossen Mengen an.

Immer weniger besteht die Möglichkeit, solche Abfallsäuren an die Umwelt abzugeben. Eine wichtige Aufgabe besteht daher darin, diese Säuren wieder aufzukonzentrieren und, wenn nötig, zu reinigen, sodass sie in einem andern oder im gleichen Prozess, wieder eingesetzt werden können.

Beim Konzentrieren gehen im allgemeinen leichtflüchtige organische Verbindungen mit den Brüden weg, während schwersiedende organische Verunreinigungen (z. B. Aromate) bei höheren Temperaturen oft unter Zugabe eines Oxydationsmittels durch Oxydation entfernt werden müssen.

Zur Lösung dieser Aufgabe ist eine ganze Reihe von Verfahren bekannt geworden.

Nach dem altbekannten Pauling-Verfahren wird die Abfallsäure in einem direkt beheizten Gusskessel, welcher mit einer Rektifizierkolonne ausgerüstet ist, aufkonzentriert und soweit möglich, von leicht- und schwersiedenden Verbindungen gereinigt. In neueren Verfahren wird die dünne verunreinigte Schwefelsäure zunächst bis ca. 70 % vorkonzentriert, oft in mehrstufigen Verdampferanlagen, anschliessend im Bereich 70-98 % $H_2SO_4$ unter Vakuum hochkonzentriert, wobei leichtflüchtige organische Verbindungen mit den Brüden weggehen, und anschliessend in einer separaten Apparatur bei höheren Temperaturen und oft unter Zugabe eines Oxydationsmittels von schwersiedenden organischen Verbindungen gereinigt.

Referenz :
- DE-B-22 42 055 D2 (Thoma)
- DE-A-29 09 029 (Schott)
- EP-A-00 22 181 (Bayer/Bertrams Gesamtverfahren)

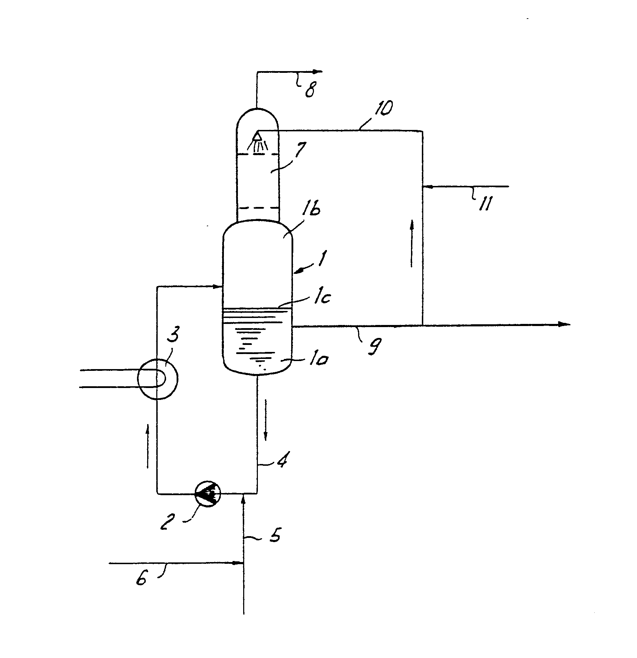

Für die Konzentrierung in der Stufe 70-98 % $H_2SO_4$ werden nach diesen modernen Verfahren vorzugsweise Natur- oder Zwangsumlaufverdampfer, z. B. gemäss Fig. 1 der Anmeldung EP-A-0 021 210 durchgeführt. Unabhängig von der Bauart im einzelnen müssen solche Verdampfer-Vorrichtungen mit einer Rektifizierkolonne ausgerüstet sein, wobei die Zuführung der zu konzentrierenden Säure in den Oberteil der Rektifizierkolonne geschieht. Sie wirkt dabei als Rücklaufflüssigkeit, wobei, immer vorausgesetzt, dass die Dünnsäure eine Konzentration von ca. 70 %, aber nicht mehr als 75 % aufweist, diese Rücklaufsäure im Gegenstrom zum aufsteigenden Wasserdampf/Säuregemisch fliesst, sich dabei aufwärmt und aufkonzentriert unter Aufnahme des Säureanteils aus den Brüdendämpfen.

Dieses Vorgehen ist unabhängig von der Art des Verdampfers, es kann sich also um einen Zwangsumlauf-, Naturumlauf- oder auch um einen gewöhnlichen Kessel-Verdampfer handeln.

Nun gibt es Säuren, z. B. solche, die mit aliphatischen Verbindungen oder bereits mit festen Kohlenstoffteilchen verunreinigt sind, die mit den obigen Verfahren nicht aufgearbeitet werden können, da sie beim Konzentrieren und Reinigen zu starker Schaumbildung und/oder zur Ausscheidung von festen koksartigen Ausscheidungen führen können.

Beim Versuch, solche Säuren zu konzentrieren und zu reinigen in Apparaturen, wie sie oben beschrieben sind, wird bereits im Bereich der Rektifizierkolonne, aber auch im Ausdampfraum, oft ein derartiges Schäumen beobachtet, dass ein Betrieb unmöglich wird. Dazu kommt oft eine markante Ausscheidung von feinen, koksartigen Partikeln, die zu Ablagerungen und Verstopfungen in der Apparatur führen. Ferner wird oft eine heftige Oxydations-Reaktion der organischen Verunreinigungen in der Säure mit der Schwefelsäure selbst festgestellt, was unter starker $SO_2$-Bildung mit entsprechendem Säureverlust verbunden ist.

Die Zugabe eines Oxydationsmittels zur verunreinigten Säure bringt keine wesentliche Verbesserung, da die Oxydationsmittel in der Rektifizierkolonne mit den Brüden weggehen können, bevor sie wirksam werden, d. h. bevor sie mit den organischen Verunreinigungen in der Säure reagieren können.

Aehnliches Verhalten wurde z. B. auch festgestellt bei Abfallsäuren aus der Produktion von Isobutanol. Diese Säuren lassen sich zwar im gewünschten Bereich wieder aufkonzentrieren und in den Prozess zurückführen, jedoch beobachtet man eine Zunahme von feinverteilten, russartigen Kohlenstoffteilchen, welche sich im ganzen Kreislauf ablagern, sodass die gesamte Säurecharge in relativ kurzen Intervallen ausgewechselt werden muss, was nicht nur mit grossen Kosten verbunden ist, sondern auch Umweltprobleme mit sich bringt, sofern diese Säure nicht nach den teuren Verfahren der thermischen Spaltung und Wiederherstellung von frischer Schwefelsäure aufbereitet werden.

Die vorliegende Erfindung bezweckt nun ein Verfahren vorzusehen sowie eine Einrichtung zu dessen Durchführung, mit welchem Verfahren praktisch jede mit mehr oder weniger organischen Verunreinigungen anfallende vorkonzentrierte Schwefelsäure konzentriert und falls erwünscht, gereinigt werden kann, ohne dass in untolerierbarer Weise Schaumbildung, $SO_3$-Verlust oder Kohlenstoffausscheidung in fester Form auftritt.

Zu diesem Zweck ist das erfindungsgemässe Verfahren, bei welchem die aufzubereitende Schwefelsäure unter Wärmezufuhr kontinuierlich einem Verdampfungsprozess zugeführt und unter kontinuierlicher Abtrennung der Brüden auf höhere Konzentration gebracht wird, dadurch gekennzeichnet, dass die aufzubereitende Schwefelsäure in dem notwendigen Aufheizweg entsprechendem, eine Reaktionsstrecke bildendem Abstand von der Abtrennstelle der Brüden und Gase von der Flüssigphase einem Teil der den Verdampfungsprozess konzentriert verlassenden Säure zugeführt und mit dieser der genannten Abtrennstelle zugeleitet wird, wobei der aufzubereitenden Säure vor deren Einführung in die Flüssigphase der im Verdampfungsprozess befindlichen Säure im Gleichstrom ein Oxydationsmittel zugegeben wird.

Damit wird erreicht, dass die beim Aufheizen der Flüssigphase auf die Verdampfungstemperatur auftretenden Reaktionen der Verunreinigungen mit der Flüssigphase der Säure relativ gebremst ablaufen und nicht zu Schaumbildung führen können, wie dies bei der üblichen Zugabe gewisser aufzubereitenden Säuren in die Gasphase, d. h. in einer Rektifizierzone der Brüden vielfach auftritt. Da es aber besonders beim Hochkonzentrieren der Säure auf oder über 70 % bei den dazu notwendigen Temperaturen zu einem mehr oder weniger grossen Gehalt der Brüden an $H_2SO_4$ und bei höheren Konzentrationen auch $SO_3$ und damit zu unerwünschtem Säureverlust kommen kann, werden die abziehenden Brüden zweckmässig rektifiziert. Dies erfolgt zweckmässig dadurch, dass die Brüden in Gegenstrom mit Wasser oder mit verdünnter und damit in den Verdampfungsprozess rücklaufender bereits konzentrierter Säure rektifiziert werden.

Zu bemerken ist, dass beim Aufheizen der aufzubereitenden Säure schon vor Erreichen der Verdampfungstemperatur gewisse Verunreinigungen direkt mit der Säure reagieren, wobei die gasförmigen Reaktionsprodukte mit den Brüden abziehen. Dieser beim Konzentrieren von Schwefelsäure auftretende Reinigungseffekt ist aber oft ungenügend, dies insbesondere auch dann, wenn im Konzentrat unerwünschte Kohlenstoff-Festpartikel vorhanden sind oder ausgefällt werden. Um solche und andere in Konzentrat verbleibende Verunreinigungen zu entfernen, wird der aufzubereitenden Säure vor deren Einführung in den Verdampfungsprozess ein geeignetes Oxydationsmittel, z. B. Salpetersäure oder Wasserstoffperoxyd, zugegeben. Dem Oxydationsmittel steht damit genügend Einwirkungszeit und enger Kontakt mit den Verunreinigungen zur Verfügung, um bis zur Trennung der Brüden von der konzentrierten Flüssigphase mit den Verunreinigungen zu reagieren, sodass diese in Form von gasförmigen Verbindungen, unter anderem auch CO und $CO_2$ mit den Brüden abziehen können.

Die ebenfalls Erfindungsgegenstand bildende Einrichtung zur Durchführung des erfindungsgemässen Verfahrens besitzt wenigstens eine Verdampfungskammer mit einer unteren Konzentratzone und einer darüberliegenden an eine Brüdenabzugleitung angeschlossene Brüdenzone, wobei die Zuführleitung für die aufzubereitende Säure in einem vorbestimmten Abstand von der Trennebene der beiden Zonen in eine vom Boden eines die Verdampfungskammer bildenden Behälters ausgehende über eine Pumpe und einen Wärmeaustauscher zur Brüdenzone des Behälters führende Umlaufleitung mündet, wobei in die stromaufwärts der Pumpe an die Umlaufleitung angeschlossene Zuführleitung eine Zugabeleitung für Oxydationsmittel mündet.

Erfindungsgemäß wird das Konzentrieren der Säure im Umlaufverfahren durchgeführt. In diesem Fall kann die Konzentratzone der Verdampfungskammer durch eine von der Konzentratzone ausgehende Umlaufleitung über einen Wärmetauscher mit der Brüdenzone verbunden sein, wobei die Zuführleitung für die aufzubereitende Säure in genügendem Abstand von der als Phasentrennstelle wirkenden Einmündung der Umlaufleitung in die Brüdenzone in die zweckmässig mittels einer Pumpe konzentrierte Säure aus der Konzentratzone über den Wärmeaustauscher zur Brüdenzone führende Umlaufleitung mündet. Um eine Rückführung von durch die Brüden mitgeführtem $H_2SO_4$ und $SO_3$ zu erreichen, kann im Brüdenauslass der Brüdenzone eine Rektifizierkolonne vorgesehen sein, der im Gegenstrom zu den Brüden wieder verdünnte Konzentratsäure oder Wasser zugeführt wird. Mit diesen Einrichtungen lassen sich auch Abfall- bzw. in anderer Weise verdünnte und verunreinigte Schwefelsäuren einwandfrei konzentrieren und falls erwünscht, reinigen.

Die Erfindung ist im folgenden anhand der Zeichnung beispielsweise näher erläutert. Die schematische Zeichnung zeigt :

ein Beispiel einer nach den Umlaufverfahren arbeitenden Konzentrier- und Reinigungsvorrichtung.

Die in der Zeichnung 1 dargestellte Umlauf-Verdampfer Vorrichtung zum Konzentrieren von verunreinigter Schwefelsäure zeigt einen Verdampferbehälter 1, dessen Innenraum durch den Flüssigkeitsspiegel 1c der in ihm enthaltenen Schwefelsäure in eine untere Konzentratzone 1a und eine obere Brüdenzone 1b unterteilt ist. Vom Boden des Behälters 1 führt über eine Pumpe 2 und einen Wärmeaustauscher 3 eine Umlaufleitung 4 zur Brüdenzone 1b des Behälters 1. Vor der Pumpe 2 und zweckmässig etwa am tiefsten Punkt der Umlaufleitung 4 und damit in relativ grossem Abstand von der Mündung der Umlaufleitung 4 in die Brüdenzone 1b mündet in diese Umlaufleitung 4 eine Zuführleitung 5 für die aufzubereitende, d. h. zu konzentrierende und zu reinigende Schwefelsäure. An diese Zuführleitung 5 ist ausserdem eine Zugabeleitung 6 für ein Oxydationsmittel angeschlossen. Die Vermischung von aufzubereitender Säure mit dem Oxydationsmittel erfolgt vorzugsweise mittels eines statischen Mischers. Die Einmündung der Zuführleitung 5 in die Umlaufleitung 4 kann auch in Fliessrichtung nach der Pumpe 2 vorgesehen sein. Ueber dem Behälter 1 ist eine mit der Brüdenzone 1b in Verbindung stehende Rektifizierkolonne 7 angeordnet, deren Brüdenabzugleitung mit 8 bezeichnet ist. Unterhalb des Flüssig-

keitsspiegels lc im Behälter. 1 ist an den letzteren eine Wegführleitung 9 für die konzentrierte, gereinigte Säure angeschlossen. Von dieser Wegführleitung 9 führt eine Rücklaufleitung 10, in die eine Wasser-Zugabeleitung 11 mündet, in den Brüdenabzugbereich der Rektifizierkolonne 7.

Zu Beginn des mit dieser Einrichtung durchzuführenden Konzentrier- und Reinigungsverfahrens, wird die Konzentratzone 1b des Behälters 1 mit auf Betriebstemperatur vorgeheizter, bereits konzentrierter oder reiner Schwefelsäure, auf jeden Fall aber mit Säure, die nicht mehr in der geschilderten Art reagiert, gefüllt. Wird nun beim Betrieb der Einrichtung der aus der Konzentratzone 1b durch die Pumpe 2 durch die Umlaufleitung 4 geförderten konzentrierten Säure über die Einführleitung 5 kontinuierlich aufzubereitende Schwefelsäure zugeführt, so erfolgt nicht nur eine innige Mischung der beiden Säureanteile, sondern im Wärmeaustauscher 3 auch eine Erhitzung dieses Gemischs, so dass beim Eintritt in die Brüdenzone 1b des Behälters 1 die sich während des Durchlaufs ausgedampften Brüden dort von der nun höher konzentrierten in die Konzentratzone 1a fallenden Flüssigphase trennen und durch die Rektifizierkolonne 7 nach oben entweichen. Je nach dem Konzentrierungsgrad der durch die Leitung 5 zugeführten Säure und der in der Durchlaufleitung 4 erzielten Säuretemperatur wird sich in der Konzentratzone 1a eine bestimmte Säurekonzentration einstellen. Auch wenn Säure niedriger, z. B. nur 50 % betragender Konzentration zugeführt wird, kann bei genügend langem Umlauf der Leitung 9 eine weit über 70 %ige Säure entnommen, werden. Es hat sich gezeigt, dass gewisse Verunreinigungen dank Erhitzung und engem Kontakt mit der Säure in der Umlaufleitung 4 und unter Umständen auch noch in der Konzentratzone 1a mit der Säure selbst zu reagieren vermögen, wobei nicht nur $SO_2$, sondern auch andere durch Oxidation entstehende Verbindungen entstehen, die in Gasform mit den Brüden abgezogen werden. Dies führt in jedem Fall zu einer gewissen Reinigung der konzentrierten Säure. Ist aber ein höherer Reinheitsgrad erwünscht oder möchte man Reaktionen der Verunreinigungen mit der Säure unter $SO_2$-Bildung und Ausfall von festen Ausscheidungen vermeiden, so wird der zugeführten Säure durch die Leitung 6 ein geeignetes Oxydationsmittel zugeführt. Da der Abstand der Zuführstelle der mit Oxydationsmittel versehenen Säure von der Einleitungsstelle der erhitzten Säure in die Brüdenzone 1b relativ gross ist, hat auch hier das sich zunehmend miterhitzte Oxydationsmittel genügend Zeit, um zunehmend und wirksam mit den oxydierbaren Verunreinigungen zu reagieren, so dass die in Gasform überführten Reaktionsprodukte mit den Brüden abziehen können. Abrupt ablaufende Reaktionen, Ausscheidung und unzulässige Schaumbildung können so einwandfrei vermieden werden. Da bei den meist über 70 % betragenden Säurekonzentrationen bei entsprechender Temperatur die Brüden $H_2SO_4$ und $SO_3$ enthalten, was zu unerwünschten Säureverlusten und/oder Umweltbelastungen führt, werden in diesem Fall die Brüden rektifiziert. Dies geschieht im Gegenstrom durch mit Wasser auf zweckmässig weniger als 70 % verdünnte, bereits gereinigte Konzentratsäure, die über die Rücklaufleitung 10 der Rektifizierkolonne 7 zugeführt wird. Trotz relativ hoher Temperatur kann dieses Rektifiziermittel in der Rektifizierkolonne bzw. in der Brüdenzone 1b des Behälters 1 dank seiner relativen Reinheit dort nicht zu Ablagerungen führenden und/oder schaumbildenden Reaktionen führen, wie dies bei der Verwendung von zu konzentrierender Schwefelsäure mit gewissen Verunreinigungen als Rektifiziermittel der Fall wäre.

Mit dem beschriebenen Verfahren lassen sich somit auch solche verdünnte Schwefelsäuren durch Verdampfen zu einer relativ reinen Produktsäure konzentrieren, deren Verunreinigungen bisher eine solche Aufbereitung nicht ohne weiteres zuliessen ; dies gestattet es, mit ein und derselben Einrichtung mit den unterschiedlichsten organischen Verunreinigungen belastete Schwefelsäuren zu konzentrieren und zu reinigen.

## Patentansprüche

1. Umlaufverfahren zum Konzentrieren und Reinigen von organische Verunreinigungen enthaltender Schwefelsäure, bei welchem die aufzubereitende Schwefelsäure unter Wärmezufuhr kontinuierlich einem Verdampfungsprozess zugeführt und unter kontinuierlicher Abtennung der Brüden auf höhere Konzentration gebracht wird, dadurch gekennzeichnet, dass die aufzubereitende Schwefelsäure in dem notwendigen Aufheizweg entsprechendem, eine Reaktionsstrecke bildendem Abstand von der Abtrennstelle der Brüden und Gase von der Flüssigphase einem Teil der den Verdampfungsprozess konzentriert verlassenden Säure zugeführt und mit dieser der genannten Abtrennstelle zugeleitet wird, wobei der aufzubereitenden Säure vor deren Einführung in die Flüssigphase der im Verdampfungsprozess befindlichen Säure im Gleichstrom ein Oxydationsmittel zugegeben wird.

2. Verfahren nach Anspruch 1, dadurch gekennzeichnet, dass die abziehenden Brüden mit Wasser oder mit verdünnter, den Verdampfungsprozess konzentriert verlassender Säure rektifiziert werden.

3. Einrichtung zur Durchführung des Verfahrens nach Anspruch 1, gekennzeichnet durch wenigstens eine Verdampfungskammer (1) mit einer unteren Konzentratzone (1a) und einer darüberliegenden an eine Brüdenzugleitung (8) angeschlossene Brüdenzone (1b), wobei die Zuführleitung (5) für die aufzubereitende Säure in einem vorbestimmten Abstand von der Trennebene (1c) der beiden Zonen in eine vom Boden eines die Verdampfungskammer bildenden Behälters (1) ausgehende über eine Pumpe (2) und einen Wärmeaustauscher (3) zur Brüdenzone (1b) des Behälters (1) führende Umlaufleitung (4) mündet, wobei in die stromaufwärts der Pumpe (2) an die Umlaufleitung (4) angeschlossene Zuführleitung (5) eine Zugabeleitung (6) für Oxydationsmittel mündet.

4. Einrichtung nach Anspruch 3, dadurch gekennzeichnet, dass die Brüdenzone (1b) des Behälters (1) über eine Rektifizierkolonne (7) mit der Brüdenabzugleitung (8) verbunden ist und dass an die unterhalb der Trennebene (1c) der beiden Behälterzonen (1a) 1b) an den Behälter (1) angeschlossene Konzentratabzugleitung (9) eine zur Rektifizierkolonne (7) führende Säurerücklaufleitung (10) angeschlossen ist, die mit einer Wasserzugabeleitung (11) in Verbindung steht.

## Claims

1. Circulatory process for concentrating and purifying sulphuric acid containing organic impurities, in which the sulphuric acid to be prepared is continuously fed to an evaporation process with the input of heat and brought to a higher concentration with continuous separation of the vapours, characterised in that the sulphuric acid to be prepared is fed to part of the acid leaving the evaporation process in concentrated form, at a distance from the point of separation of the vapours and gases from the liquid phase corresponding to the required heating path, forming a reaction line, and is led therewith to the said separation point, an oxidising agent being added in equidirectional flow to the acid to be prepared prior to its introduction into the liquid phase of the acid present in the vapourisation process.

2. Process according to claim 1, characterised in that the vapours drawn off are rectified with water or with diluted acid which leaves the vapourisation process in concentrated form.

3. Plant for carrying out the process according to Claim 1, characterised by at least one vapourisation chamber (1) comprising a bottom concentrate section (1a) and positioned above it, a vapour section (1b) connected to a vapour draw-off duct (8), the feed duct (5) for the acid to be prepared opening into a circulating pipe (4) starting from the base of a vessel (1) forming the vapourisation chamber and leading into the vapour section (1b) of the vessel (1) via a pump (2) and a heat exchanger (3) at a predetermined distance from the dividing plane (1c) of the two sections, and admixing pipe (6) for oxidising agents opening into the feed pipe (5) which is connected to the circulating pipe (4) upstream from the pump (2).

4. Plant according to claim 3, characterised in that the vapour section (1b) of the vessel (1) is connected to the vapour draw-off duct (8) via a rectifying column (7) and that an acid return pipe (10) which is in communication with a water admixing pipe (11) and leads to the rectifying column (7) is connected to the concentrate drain pipe (9) which is connected to the vessel (1) below the separation plane (1c) of the two vessel sections (1a, 1b).

## Revendications

1. Procédé en circuit fermé pour la concentration et l'épuration d'un acide sulfurique contenant des impuretés organiques, dans lequel l'acide sulfurique à traiter est introduit en continu dans une opération d'évaporation, et est amené à une concentration plus élevée avec séparation continue des fumées, caractérisé en ce que l'acide sulfurique à traiter est introduit à une distance correspondant au parcours d'échauffement nécessaire, formant une étendue de réaction, du point de séparation des fumées et des gaz de la phase liquide, dans une partie de l'acide quittant à l'état concentré l'opération d'évaporation et est envoyé avec celui-ci au point de séparation indiqué, un oxydant étant ajouté dans le sens du courant de l'acide à traiter avant l'introduction dans la phase liquide de l'acide se trouvant dans le procédé d'évaporation.

2. Procédé suivant la revendication 1, caractérisé en ce que les fumées à éliminer sont rectifiées avec de l'eau ou avec un acide dilué, quittant le procédé d'évaporation à l'état concentré.

3. Dispositif pour la mise en œuvre du procédé suivant la revendication 1, caractérisé par au moins une chambre d'évaporation (1) avec une zone de concentré inférieure (1a) et une zone de fumées (1b) placée sur celle-ci, reliée à une canalisation d'évacuation des fumées (8), la canalisation d'amenée (5) pour l'acide à traiter débouchant à une distance prédéterminée du plan de séparation (1c) des deux zones dans une canalisation de circulation (4) sortant du fond d'un récipient (1) formant la chambre d'évaporation, conduisant par une pompe (2) et un échangeur de chaleur (3) à la zone de fumées (1b) du récipient (1), une canalisation d'addition (6) pour l'oxydant débouchant dans la canalisation d'amenée (5) reliée à la canalisation de circulation (4), en amont de la pompe (2).

4. Dispositif suivant la revendication 3, caractérisé en ce que la zone de fumées (1b) du récipient (1) est reliée par une colonne de rectification (7) à la canalisation d'évacuation des fumées (8) et en ce qu'à la canalisation d'évacuation du concentré (9) reliée au-dessous du plan de séparation (1c) des deux zones du récipient (1a) (1b) au récipient (1), est reliée une canalisation de reflux de l'acide (10) conduisant à la colonne de rectification (7), laquelle canalisation de reflux est en liaison avec une canalisation d'addition d'eau (11).